(19) **Europäisches Patentamt**

**European Patent Office**

**Office européen des brevets**

(11) Publication number: **0 169 379**
**B1**

(12) **EUROPEAN PATENT SPECIFICATION**

(45) Date of publication of patent specification: **13.09.89**

(21) Application number: **85107665.3**

(22) Date of filing: **21.06.85**

(51) Int. Cl.⁴: **G 01 B 21/28, G 01 B 21/20**

(54) **A measuring device for a figure.**

(30) Priority: **22.06.84 JP 129550/84**
**30.07.84 JP 160962/84**
**29.01.85 JP 11452/85 u**

(43) Date of publication of application:
**29.01.86 Bulletin 86/05**

(45) Publication of the grant of the patent:
**13.09.89 Bulletin 89/37**

(84) Designated Contracting States:
**DE FR GB IT**

(56) References cited:
**DE-A-1 909 189**
**GB-A-1 526 428**
**US-A-2 993 278**
**US-A-3 561 125**
**US-A-4 246 703**

(73) Proprietor: **Tamaya Technics Incorporated**
**14-7, 2 chome Ikegami Ohta ku**
**Tokyo (JP)**

(72) Inventor: **Kobayashi, Mikio**
**3-14-20 Sakura Setagaya-ku**
**Tokyo (JP)**

(74) Representative: **Walter, Helmut**
**Aubingerstrasse 81**
**D-8000 München 60 (DE)**

Courier Press, Leamington Spa, England.

## Description

### Field of the invention

This invention relates to a measuring device for a figure such as linear planimeter for measuring the area of the closed curve, length between two points on the curve, coordinate of the points. Under a somewhat different aspect the field of the invention can be described as a measuring instrument which is used for measuring an area and a perimeter of a figure, or for measuring the distance between two points on a plane, length between apex, or picking up coordinate values of points on a plane.

### Background of the invention

Heretofore, planimeter is used for measuring the area of closed curve. As known in the planimeter, tracing lens or tracing needle is moved along the figure to be measured, while integral wheel is rolling on the plane of the figure in the right angle direction against moving direction of the tracing lens or tracing needle by the friction force between the plane and integral wheel. However irregular friction of the plane or slipping of the integral wheel due to smooth surface of the plane (less friction) produces error. The displacement of the integral wheel is read by eye and measure provided in the integral device in the aid of vernier at the beginning and end of the measuring, but reading error is inevitable. Of course resetting device to be zero is provided in the integral device which is usually push button, but it needs delicate operation.

In the linear planimeter, a carriage is supported by a pair of wheels so as to move along a straight line reciprocally. For preventing a slip of the wheels, a friction ring is provided around the periphery of the wheels consisting of diamond powder by electrodeposition. But it is not satisfactory. Widening the width of the friction ring is not effective because unevenness of diamond powder occurs.

In known planimeters a tracing lens or neelde is used, which is moved along a figure or a line to be measured. While tracing, the integral wheel touching on the surface by friction rolls only toward the direction which makes the right angle against the moving direction of the tracing lens or needle. However in this system, slip of the integral wheel caused by the irregularity of the friction on the plane or extremely smooth plane is inevitable. Besides, the integral wheel wears. When this occurs, the instrument makes inconsistant reading very easily. The problems of wheel slip and inaccurate operation are well known and solved, e.g. in US—A—2,993,278 in that the rollers can be knurled to prevent them from slipping on a smooth or glazed surface, and on which the first part of claim 1 is based. According to US—A—4,246,703 it is known to measure the component of displacement of a drive wheel perpendicular to the drive wheel shaft and to read out on a display, and it is known as an option to use two independent integral self measuring electronic drafting instruments on a commercial drafting machine at right angles to each other, the rotation of a wheel of the one instrument is proportional to the vertical component of displacement and the rotation of a wheel of the other instrument is proportional to the horizontal component of displacement. Well known is a position sensing device from US—A—3,561,125 which is especially an electro-mechanical sensor system for measuring and describing the position of a point in space by spherical coordinates, describing the position of the point in an accurately reproducible manner and involving relatively simple components, being easy to operate.

### Brief description of the invention

This invention intends to eliminate said drawbacks of resetting of integral device and slipping of integral wheel and a pair of wheels of the carriage. In this invention, a carriage is supported by a pair of wheels, measure lever is supported rotatably about vertical shaft on the carriage, rotation angle A of the wheels is accounted by pulse 'a' of a pulse generator, rotation angle B of the measure lever is accounted by pulse 'b' of pulse generator, a tracing needle or lens is provided at the end of the measure lever, the position of the tracing lens or needle in rectangular coordinate X, Y, X is calculated by sin A and cos B, while Y is calculated by cos B, then area or length of the curve to be measured are calculated. For this purpose, sin generator, cos generator or tan generator is provided. By this generator, integral wheel or integral device which corresponds to detect sin signal are eliminated and problems due to slipping are avoided.

Other object of this invention is to provide measuring device for a figure in which plurality of friction rings are provided on the wheels supporting the carriage.

### Summary of the invention

This invention is to eliminate the above mentioned drawbacks of the integral device and the slip of the measuring wheel. To eliminate these two defects, this newly invented measuring device is characterized as set out in the second part of claim 1.

### Brief description of the drawings

Fig. 1 is a plan view of an embodiment of the invention

Fig. 2 is a side view of the embodiment

Fig. 3 is a side view of the wheel supporting carriage.

Fig. 4 is a block diagram of the circuit of the embodiment

Fig. 5 is a block diagram of the calculating part of the embodiment

Fig. 6 is a flow chart of the calculating part

Fig. 7 is a block diagram of a calculating part of another embodiment of this invention

Fig. 8 is a block diagram of the calculating circuit of the another embodiment of this invention

Fig. 9 is a block diagram of the calculating part of the embodiment

Fig. 10 is a flow chart of the calculating part

Fig. 11 is a block diagram of the calculating part of the still another embodiment of this invention Fig. 12 is a plan view of further still another embodiment of this invention.

Fig. 13 is a plan view of tan generator

Fig. 14 is a block diagram of the circuit of the embodiment

Fig. 15 is a plan view of another embodiment of this invention.

Detailed description of the invention

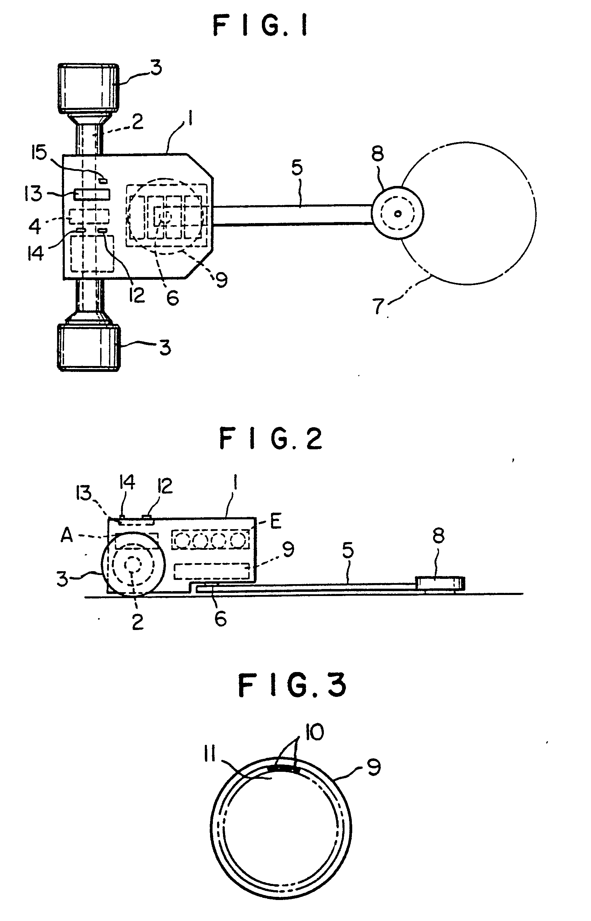

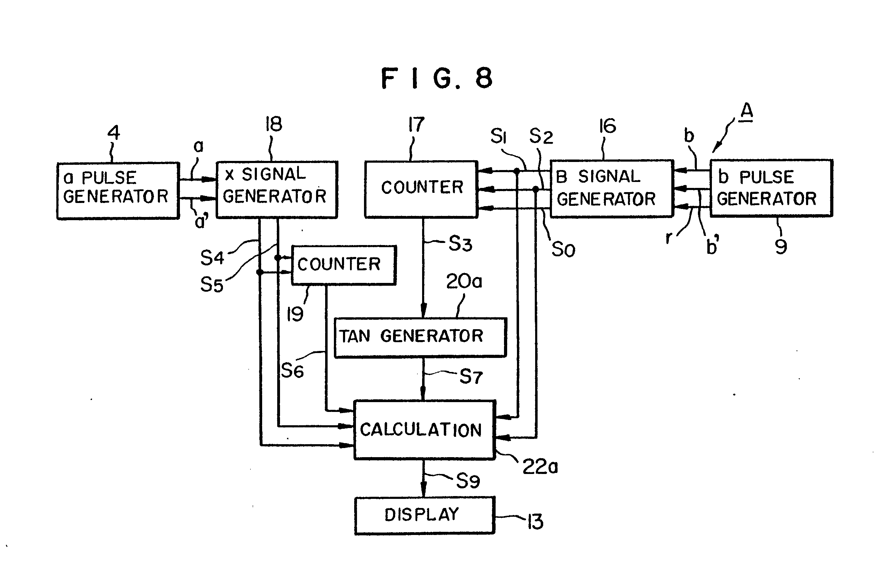

Figs. 1 to 6 show an embodiment of this invention applied to a linear planimeter. As shown in Figs. 1 and 2, a carriage 1 is supported a pair of wheels 3,3 of wide width at opposite ends of a shaft 2 so as to move along a straight line reciprocally. In the carriage 1, pulse generator 4 is provided for producing a series of pulse a whose number is proportional to the rotation angle A of the wheels 3,3. A tracing lever 5 is supported on the carriage 1 rotatably about vertical shaft 6. At the end of the measure lever 5, a measuring lens 8 is provided to tracing a figure 7 to be measured. In the carriage 1, a pulse generator 9 is provided for producing a series of pulse b whose number is proportional to the rotation angle B of the tracing lever 5. As shown in Fig. 3, a measure 10 for producing pulse b and a measure 11 for producing original point signal r are provided in the pulse generator 9.

12 is a switch for clearing, 13 is a displaying device, 14 is power switch, 15 is a selection switch of operation, E is a battery case, A is a calculating circuit.

Operations of the device are as follows.

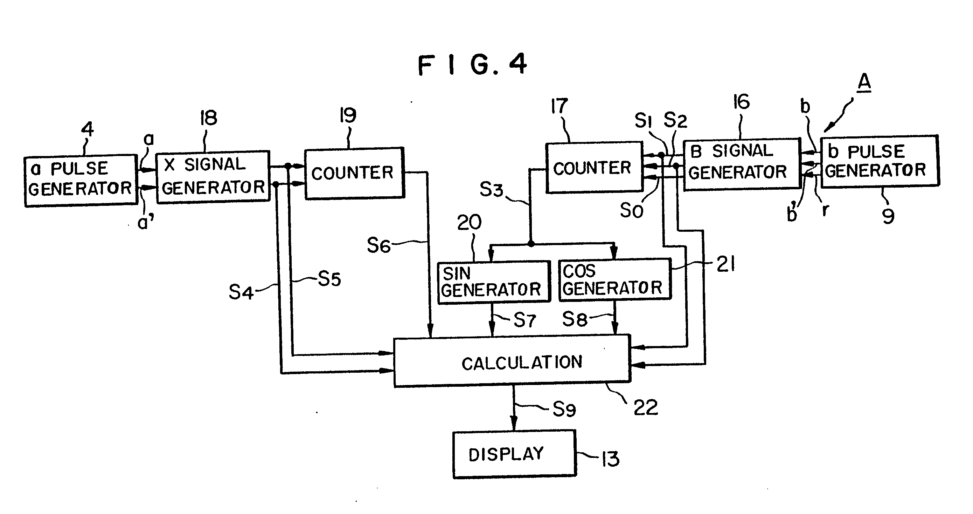

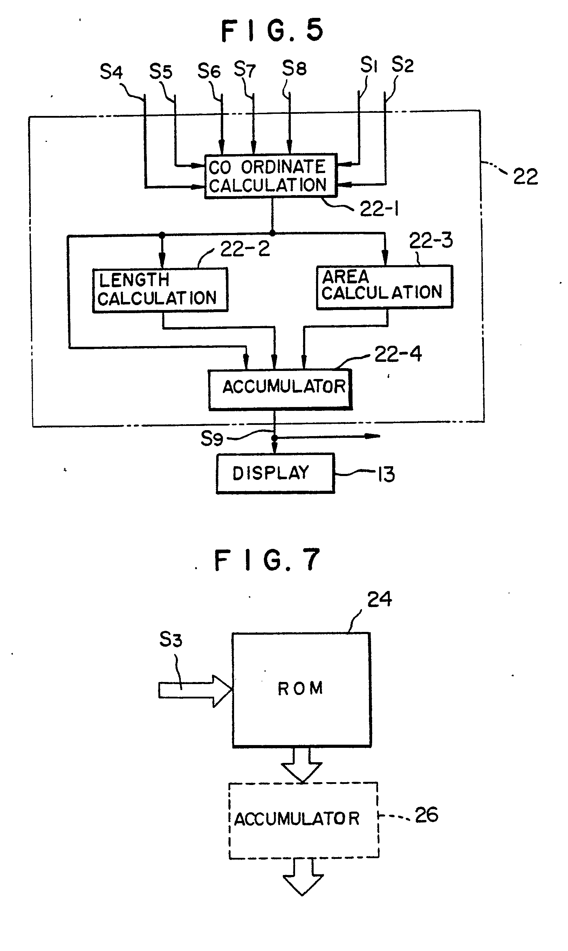

As shown in Fig. 1, the carriage 1 is put on the drawing of the Figure 7. The measure lever 5 is rotated so as to pass original measure 11. Then the generator 9 generates r signal as shown in Fig. 4, then signal generator 16 generates clear pulse signal SO, thereby counter 17 for accounting pulse b is cleared to be zero. Thus, operator begins to trace the Figure 7 to be measured, generator 9 generates pulse b and b' which is phase shifted signal than pulse b for discriminating the rotation direction, signal generator 16 generates signal S1, S2, counter 17 accounts their signals and integrate the signals and generates accumulated signal S3 which corresponds to rotation angle B of measure lever 5 and transmit the signal S3 to sin generator 20, and cos generator 21. On the other hand, pulse generator 4 generates pulse a and a' which is phase shifted signal than pulse a for discriminating the rotation direction, signal generator 18 generates positive signal S4 or negative signal S5, and transmit the signal S4, S5 to counter 19, counter 19 accounts their signals and integrate the signals and generates accumulated signal S6 which corresponds to rotation angle A of wheels 3,3, i.e. x. The x signal S6 from generator 19, sin signal S7 from sin generator 20 and cos signal S8 from cos generator 21 are fed to calculation part 22. Said signals S1, S2, S4, S5 are also fed to the calculation part 22 as synchronizing signals. Thereby said signals S6, S7, S8 are taken into the calculation part 22 synchronously with one of signals S1, S2, S4, S5, and calculated. As shown in Fig. 5, the calculation part 22 has coordinate calculation part 22-1, length calculation part 22-2 and area calculation part 22-3.

The coordinate calculation part 22-1 performs following calculation.

$$X = x - (L - L \cos B)$$
$$Y = L \sin B \qquad (1)$$

L means the length of measure lever 5 (distance between center of shaft 6 and measuring lens 8).

The length calculation part 22-2 performs following calculation

$$Length = \Sigma \sqrt{(X_i - X_{i-1})^2 + (Y_i - Y_{i-1})^2} \qquad (2)$$

The area calculation part 22-3 performs following calculation

$$Area = \Sigma (X_i - X_{i-1})(Y_i - Y_{i-1})/2 \qquad (3)$$

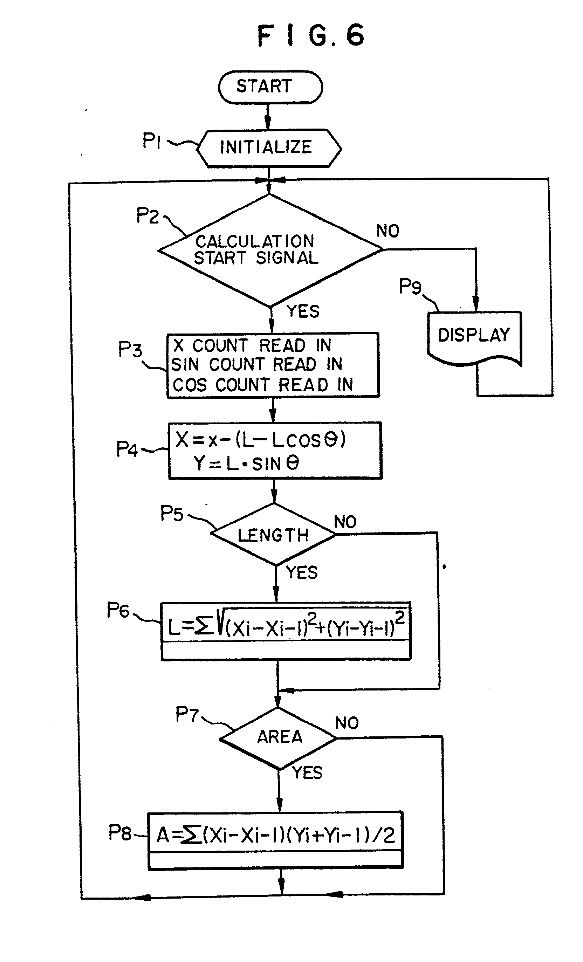

The resultant of the calculations are fed to accumulate part 22-4 and the resultant S9 is displayed or output. The function of the calculation part 22 is performed by computer and Fig. 6 shows the flow of the computer programs.

As shown in Fig. 6, After Start, at step P1 initialize, at step P2 judges the existence of calculation start signals S1, S2, S4, S6. If yes, go to step P3 and x signal S6, sin signal S7, and cos signal S8 are read and go to step P4. At step P4 calculation of said formula (1) is performed and go to step P5. At step P5 judges the calculation of length refering switch 15. If yes, go to step P6 and calculation of said formula (2) is performed, and go to step P7. At step P7 judges the calculation of area referring switch 15. If yes, go to step P8 and calculation of said formula (3) is performed.

In said embodiment, sin generator 20, cos generator 21 uses operator, but it takes time and high speed measuring can be performed. For eliminating the defect, table system generator can be used. Fig. 7 uses ROM 24 which memorizes the table of sin or cos in each address. Said signal S3 designates the address and corresponding sin or cos values are read out instantaneously. The memory of the RAM may be difference of each sin or cos values. In this case accumulator 26 is required as shown in dotted line. This system saves capacity of memory.

After the step P8, return to step P2 and said operations are repeated. If measuring is stopped, judges in step P2 turns to NO and go to step P9 and resultant is displayed.

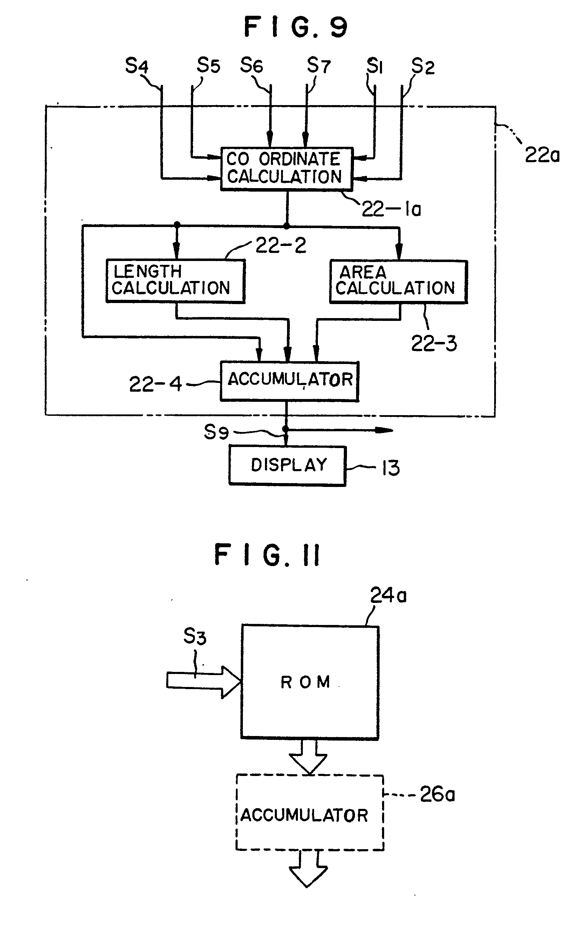

Figs. 8 to 10 show other embodiment of this invention in which tan generator 20a is used instead of sin generator 20 and cos generator 21 (Fig. 8). Fig. 9 is almost same to Fig. 5 but function of calculation part 22-1a is different. In the calculation part 22-1a, following calculation is performed.

$$X = x - 1(L - L\sqrt{\dfrac{1}{\tan^2 B + 1}})$$

$$\qquad\qquad\qquad\qquad\qquad (4)$$

$$Y = L\sqrt{\dfrac{\tan^2 B}{\tan^2 B + 1}}$$

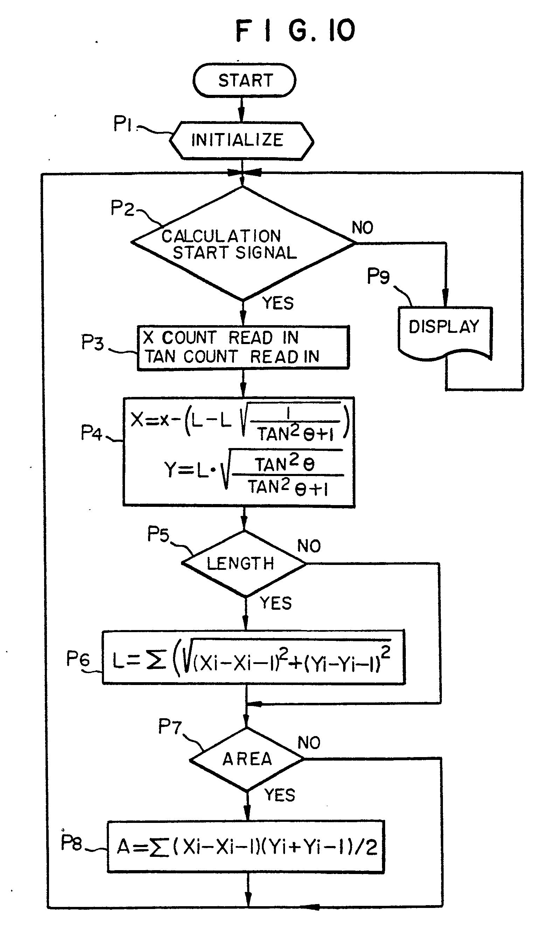

Fig. 10 is almost same to Fig. 6 but calculation at step P4 differs. At step P4, calculation of said formula (4) is performed.

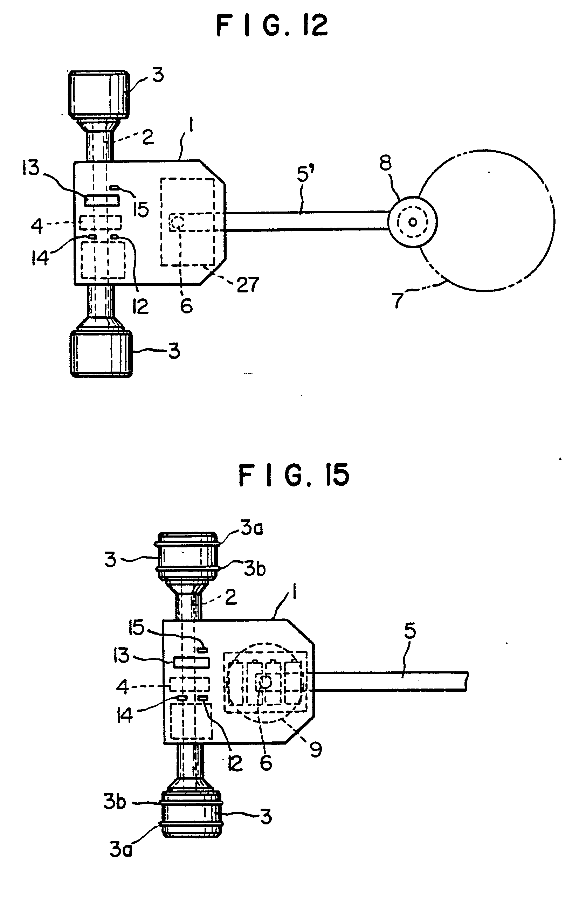

Fig. 11 is almost same to Fig. 7. In this embodiment, ROM 24a memorizes table of tan for high speed measuring instead of tan generator 20a. The memory of the RAM 24a may be difference of each tan values. In this case, accumulator 26a is required as shown in dotted line.

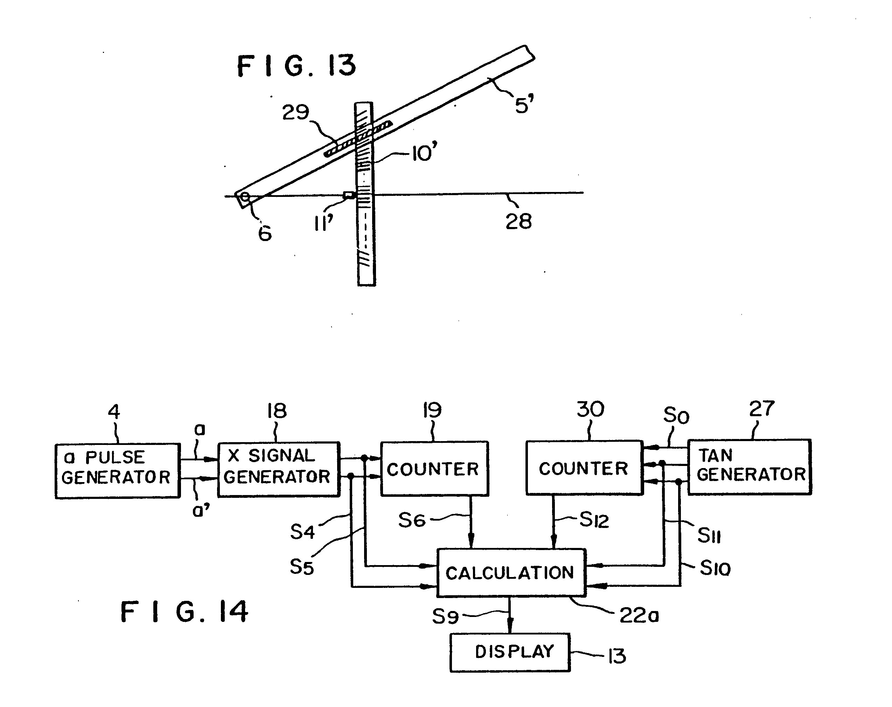

Figs. 12 to 14 show another embodiment of this invention, in which tan generator 27 is provided in the carriage 1 as shown in Fig. 12. Fig. 13 shows an example of said tan generator 27. Linear measure 10' is provided at zero angle against centerline 28 passing the center of vertical shaft 6. Original measure 11' is provided on the center line 28. Encoder (or reader) 29 is provided on the measure lever 5' which extends along the measure lever 5' so as to read the measure 10' and 11'.

Operations of the device are shown in Fig. 14 which is almost same to previous Fig. 4,8. When the measure lever 5' passes original measure 11' at the initial, tan generator 27 i.e. encoder 29 generates SO signal and counter 30 is learned to be zero. Then tan generator 27 generates signal S11, S10, they are accounted in counter 30. The counter 30 accounts the signals 10 and accumulates. Tan signal S12 from the counter 30 is fed to calculation part 22a. Other operations are same to previous embodiment.

Fig. 15 show another embodiment of this invention, in which two friction rings 3a, 3b are provided on the wheels 3 supporting said carriage 1.

As explained above, in this invention, coordinate of the point of figure, length of the curved line, and area of closed figure can be measured without using integral wheel and integral device, so that slip problem is not and can be measured each values accurately. Moreover plurality of friction ring contacts with the surface of drawings of the figure firmly so that slip problem due to the wheel supporting carriage can be prevented.

The rings according to the invention themselves are a new idea. To support this new measuring system, it is indespensable to get rollers which promise perfect straight run. To achieve this, the inventors gave an improvement for the rollers. In old days (actually few years ago), this type of the rollers has non-slip rings which are shaped and scraped after the rings are attached. However, this type of roller does not comply with the severe tolerance required by this measuring system. So to satisfy this requirement the inventors adopted a different way of coating for these rings. It is a way to coat the rings with finely ground layer of diamonds by electrodeposition. It seemed, at first, quite a success. For it does not have to be scraped or shaped after it is finished being coated. Besides, it scarcely wears. But, a new hinderance appeared ahead. That is producing wider rings of this kind. The inventors realized that more the bigger, more difficult it becomes. For this reason the inventors came to give two or more rings for each roller. This solves the problem of producing wider rings, and if the inventors give a few rings for a roller they can give more treads for the rollers and also they can increase the friction. Needles to say, it results high stability of the rollers and support the precision of the instrument. To describe the body, it contains main electric parts. And the body shell is mounted on the rollers. The body has a tracer arm or lever which provides the second rotary encoder at its pivot end vertically. And the mounted micro computer processes information from this encoder and the encoder at the rollers.

## Claims

1. A measuring device for measuring the characteristics of a figure (7) comprising a carriage (1) supported by a pair of wheels (3) mounted on the ends of a shaft (2) for a reciprocal motion along a straight line which is at right angles to the direction of the shaft (2); an elongate tracing lever (5) which is in the direction of the movement of the carriage (1) having one end rotatably supported on said carriage (1) and supporting tracing means (8) on the other end; the device being characterised by a pulse generator (4) for producing a series of pulses whose number is proportional to the angle of rotation of said wheels; a tracing lever pulse generator (9) for generating pulses (b,b') proportional to the rotational motion of said tracing lever (5); a trigonometrical function signal generator (20,21;20a) receiving signals ($S_3$) derived from the tracing lever pulse generator (9) and generating trigonometrical function signals ($S_7$, $S_8$); and calculating means (22) receiving said trigonometric function signals and said pulses from said tracing lever pulse generator (9), converted to signals ($S_1$, $S_2$) by a signal generator (16), said calculating means calculating the value of one or more characteristics of said figure (7) measured by said tracing means (8).

2. The mesauring device according to claim 1 including counting means (17) fed by said signal generator (16); a pair of phase shifted pulse trains (b,b') being provided from said tracing lever pulse generator (9) to said signal generator (16).

3. The measuring device according to claim 2 in which said calculating means (22) includes a coordinate calculator; a length calculator; an area calculator; and, accumulating means receiving and accumulating the output from said coordinate, length and area calculators.

4. The measuring device according to claim 3 including display means (13) for displaying the output of said calculating means (22).

5. The measuring device according to claim 4 in which said trigonometrical function signal generator comprises a sine and cosine angle signal generator (20, 21).

6. The measuring device according to claim 4 in which said trigonometrical function signal generator comprises a tangent angle signal generator (20a).

7. The measuring device according to claim 1, including a plurality of friction rings provided on each wheel (3) of said pair of wheels (3).

## Patentansprüche

1. Meßvorrichtung zum Ermitteln kennzeichnender Werte einer flächigen Abbildung (7) mit einem Wagen (1) mit Rädern (3), die an den Enden einer Achse (2) gelagert sind und Bewegungen des Wagens in zwei einander entgegengesetzten Richtungen entlang einer geraden Linie, die senkrecht zur Achsrichtung verläuft, gestatten; mit weiter einem langgestreckten Tastarm (5), der in dem Bewegungsrichtungen des Wagens (1) verläuft, am einen Ende drehbar auf dem Wagen (1) gelagert ist und am anderen Ende ein Tastmittel (8) trägt gekennzeichnet durch einen Pulsgenerator (4) der Meßvorrichtung für die Erzeugung einer Serie von Impulsen, deren Anzahl proportional zum Drehwinkel der Räder ist; durch einen Tastarmpulsgenerator (9) zur Erzeugung von Impulsen (b,b'), die proportional zur Drehbewegung des Tastarmes (5) sind; durch einen trigonometrischen Funktionssignalgenerator (20,21;20a), der Signale ($S_3$) des Tastarmpulsgenerators (9) erhält und trigonometrische Funktionssignale ($S_7,S_8$) erzeugt; und durch ein Rechnermittel (22), das die trigonometrischen Funktionssignale und die Implse des Tastarmpulsgenerators (9) aufnimmt, die mit einem Signalgenerator (16) in Signale ($S_1,S_2$) umgewandelt werden, wobei das Rechnermittel die Größe eines oder mehrerer kennzeichnenden Werte der Abbildung (7) bestimmt, die von dem Tastmittel (8) ermittelt worden sind.

2. Meßvorrichtung nach Anspruch 1 mit einem vom Signalgenerator (16) gespeisten Zählmittel (17); einem Paar phasenverschobener Pulszüge (b,b'), die vom Tasthebelpulsgenerator (9) dem Signalgenerator (16) übermittelt werden.

3. Meßvorrichtung nach Anspruch 2, bei der das Rechnermittel (22) einen Koordinatenzähler, einen Längenzähler, einen Bereichszähler und ein Speichermittel einschließt, wobei das Speichermittel die Ausgangssignale von Koordinaten-, Längen- und Bereichszähler aufnimmt.

4. Meßvorrichtung nach Anspruch 3, die ein Bildschirmmittel (13) zur Darstellung der Ausgangssignale des Rechnermittels (22) einschließt.

5. Meßvorrichtung nach Anspruch 4, bei der der trigonometrische Funktionssignalgenerator einen Sinus- und Kosinuswinkelsignalgenerator (20,21) enthält.

6. Meßvorrichtung nach Anspruch 4, bei der der trigonometrische Funktionssignalgenerator einen Tangenswinkelsignalgenerator (20a) enthält.

7. Meßvorrichtung nach Anspruch 1, die eine Mehrzahl von Reibungsringen auf jedem Rad (3) des Räderpaares (3) einschließt.

## Revendications

1. Appareil de mesure pour mesurer les caractéristiques d'une figure (7), comprenant un chariot (1) porté par deux roulettes (3) montées aux extrémités d'un arbre (2) pour effectuer un mouvement dans les deux sens le long d'une ligne droite formant un angle droit avec la direction de l'arbre (2); un bras traceur allongé (5) orienté dans la direction du mouvement du chariot (1), ayant une extrémité montée de façon tournante sur le chariot (1) et supportant des moyens dits de traçage (8) à l'autre extrémité, caractérisé en ce qu'il comporte un générateur d'impulsions (4) pour produire un train d'impulsions dont le nombre est proportionnel à l'angle de rotation des roulettes (3), un générateur d'impulsions de bras traceur (9) pour produire des impulsions (b,b') en nombre proportionnel à l'angle de rotation du bras traceur (5), un générateur de signal de fonction trigonométrique (20,21;20a) recevant les signaux (S3) obtenus à partie de signaux fournis par le générateur d'impulsions (9) du bras traceur et élaborant des signaux de fonction trigonométrique (S7, S8), et des moyens de calcul (22) recevant ces signaux de fonctions trigonométriques et les impulsions fournies par le générateur d'impulsions (9) du bras traceur convertis en signaux (S1,S2) par un générateur de signaux (16), ces moyens de calcul (22) calculant la valeur d'une ou plusieurs caractéristiques de la figure (7) mesurée par les moyens de traçage (8).

2. Appareil de mesure selon la revendication 1, caractérisé en ce qu'il comporte des moyens de comptage (17) recevant les signaux fournis par le générateur de signaux (16), deux trains d'impulsions déphasés (b,b') étant fournis par le générateur d'impulsions (9) du bras traceur au générateur de signaux (16).

3. Appareil de mesure selon la revendication 2, caractérisé en ce que les moyens de calcul (22) comprennent un calculateur de coordonnées, un calculateur de longueur et un calculateur d'aire, ainsi que des moyens d'accumulation recevant et accumulant les signaux de sortie de ces calculateurs de coordonnées, de longueur et d'aire.

4. Appareil de mesure selon la revendication 3, caractérisé en ce qu'il comporte des moyens d'affichage (13) pour afficher les résultats fournis par les moyens de calcul (22).

5. Appareil de mesure selon la revendication 4, caractérisé en ce que le générateur de signaux de fonctions trigonométriques comprend un générateur de signal de sinus (20) et un générateur de signal de cosinus (21).

6. Appareil de mesure selon la revendication 4, caractérisé en ce que le générateur de signaux de fonctions trigonométriques comprend un générateur de signal de de tangente (20a).

7. Appareil de mesure selon la revendication 1, caractérisé en ce qu'il comporte une pluralité d'anneaux de friction sur chaque roulette (3) de la paire de roulets (3).

# F I G. I

# F I G. 2

# F I G. 3

1

F I G. 4

# F I G. 5

# F I G. 7

# F I G. 6

```
          ┌─────────┐
          │  START  │
          └─────────┘
               │
               ▼
P1 ── ⬡ INITIALIZE ⬡
               │
               ▼
P2 ──  ◇ CALCULATION      NO
        START SIGNAL ──────────────┐
               │                    │
              YES            P9 ── 🗎 DISPLAY
               ▼
P3 ── ┌────────────────────┐
      │ X COUNT READ IN     │
      │ SIN COUNT READ IN   │
      │ COS COUNT READ IN   │
      └────────────────────┘
               │
               ▼
P4 ── ┌────────────────────┐
      │ X = x-(L-Lcosθ)     │
      │ Y = L·sinθ          │
      └────────────────────┘
               │
               ▼
P5 ──  ◇ LENGTH      NO ──────┐
               │               │
              YES              │
               ▼               │
P6 ── ┌───────────────────────────────┐
      │ L=Σ√(Xi-Xi-1)²+(Yi-Yi-1)²      │
      └───────────────────────────────┘
               │
               ▼
P7 ──  ◇ AREA       NO ──────┐
               │               │
              YES              │
               ▼               │
P8 ── ┌───────────────────────────────┐
      │ A=Σ(Xi-Xi-1)(Yi+Yi-1)/2        │
      └───────────────────────────────┘
```

$$X = x-(L-L\cos\theta)$$
$$Y = L\cdot\sin\theta$$

$$L = \sum \sqrt{(X_i-X_{i-1})^2+(Y_i-Y_{i-1})^2}$$

$$A = \sum (X_i-X_{i-1})(Y_i+Y_{i-1})/2$$

# F I G. 8

a PULSE GENERATOR — 4

x SIGNAL GENERATOR — 18

COUNTER — 17

B SIGNAL GENERATOR — 16

b PULSE GENERATOR — 9

COUNTER — 19

TAN GENERATOR — 20a

CALCULATION — 22a

DISPLAY — 13

# FIG. 9

# FIG. 11

# F I G. 10

```
                    ┌──────────┐
                    │  START   │
                    └──────────┘
                         │
   P1 ───  ⬡ INITIALIZE ⬡
                         │
   P2 ──◇ CALCULATION       ──NO──→  P9  ┌─────────┐
         START SIGNAL                     │ DISPLAY │
              │YES                        └─────────┘
   P3 ── ┌──────────────────┐
         │ X COUNT READ IN   │
         │ TAN COUNT READ IN │
         └──────────────────┘
              │
   P4 ──
```

$$X = x - \left( L - L \sqrt{\dfrac{1}{TAN^2\theta + 1}}\, \right)$$

$$Y = L \cdot \sqrt{\dfrac{TAN^2\theta}{TAN^2\theta + 1}}$$

```
   P5 ──◇ LENGTH ──NO──→
              │YES
```

$$P6 \quad L = \sum \left( \sqrt{(Xi - Xi-1)^2 + (Yi - Yi-1)^2}\, \right)$$

```
   P7 ──◇ AREA ──NO──→
              │YES
```

$$P8 \quad A = \sum (Xi - Xi-1)(Yi + Yi-1)/2$$

# F I G. 12

# F I G. 15

EP 0 169 379 B1

# F I G. 13

# F I G. 14